# EUROPÄISCHE PATENTSCHRIFT

(11) **EP 3 853 453 B1**
(45) Veröffentlichungstag und Bekanntmachung des Hinweises auf die Patenterteilung: **20.12.2023**
(21) Anmeldenummer: 19768803.9
(22) Anmeldetag: 12.09.2019
(51) Int. Cl.: F01P 3/02, F01P 3/12, F01P 7/14, F01P 7/16, F01P 11/04, B60T 1/087, B60T 5/00, B60T 10/02, F16D 57/04, F16D 65/78, H01M 8/04029

(54) **KÜHLSYSTEM UND VERFAHREN ZUM KONFIGURIEREN EINES KÜHLSYSTEMS**
COOLING SYSTEM AND METHOD FOR CONFIGURING A COOLING SYSTEM
SYSTÈME DE REFROIDISSEMENT ET PROCÉDÉ DE CONFIGURATION D'UN SYSTÈME DE REFROIDISSEMENT

(30) Priorität: 17.09.2018 DE 102018122702
(43) Veröffentlichungstag der Anmeldung: 28.07.2021
(73) Patentinhaber: MAN Truck & Bus SE, 80995 München (DE)
(72) Erfinder: STADLER, Ferdinand, 70437 Stuttgart (DE); SCHYDLO, Alexander, 81243 München (DE)
(74) Vertreter: v. Bezold & Partner Patentanwälte - PartG mbB
(86) Internationale Anmeldenummer: PCT/EP2019/074375
(87) Internationale Veröffentlichungsnummer: WO 2020/058084

(56) Entgegenhaltungen:
- EP-A2- 1 253 303
- WO-A1-2008/043425
- DE-A1-102010 051 032
- DE-A1-102011 015 930
- DE-A1-102013 113 813

## Beschreibung

Die Erfindung betrifft ein Kühlsystem zum Führen eines Kühlmittels für Fahrzeuge oder stationäre Anlagen und ein Verfahren zum Konfigurieren eines Kühlsystems.

Zur Einhaltung zukünftiger gesetzlichen Abgasnormen (z. B.: Abgasnorm EURO7) kann es notwendig sein, das Kühlsystem einer Antriebsvorrichtung eines Kraftfahrzeugs zu optimieren. Ziel ist es bspw., den Energiebedarf zum Antreiben einer Kühlmittelpumpe oder die Aufwärmphasen der Antriebsvorrichtung nach einem Motorstart zu verringern.

Die WO 2008/043425 A1 offenbart einen Kühlkreislauf für ein Nutzfahrzeug. Der Kühlkreislauf kühlt einen Verbrennungsmotor und einen Retarder. Es kann auch eine gekühlte Abgasrückführung vorgesehen sein. Es ist eine Drossel vorgesehen. Mit dieser kann der Fluss vom Retarder auf zwei Teilströme aufgeteilt werden. Damit können große Druckschwankungen im Kühlkreislauf verhindert werden.

Die DE 10 2010 051 032 A1 offenbart ein Kühlsystem für einen Verbrennungsmotor mit einer Abgasrückführung, über die zumindest ein Teil der Verbrennungsabgase in eine Ladeluftzufuhr einleitbar ist, mit einem in der Abgasrückführung angeordneten AGR-Wärmeübertrager, in dem Wärme vom Abgas auf ein im Kühlsystem gefördertes Kühlmedium übertragbar ist, und mit einem Kühlmittelverteiler, über den unterschiedliche Kühlkreisläufe mit Kühlmittel versorgbar sind. Der Kühlmittelverteiler ist fluiddicht mit einem Motorkühlkreislauf zur Kühlung von Motorkomponenten, mit einem AGR-Kühlkreislauf zur Abführung der im AGR-Wärmeübertrager an das Kühlmedium übertragenen Wärme und mit einem Hauptkühlkreislauf, der einen Fahrzeugkühler zur Abführung anfallender Wärme an die Umgebung aufweist, verbunden. Im Kühlmittelverteiler ist zumindest eine Armatur vorgesehen, mit der ein Kühlmittelstrom im Kühlmittelverteiler veränderbar und auf unterschiedliche Kühlkreisläufe verteilbar ist.

Dokument DE 10 2011 015 930 A1 offenbart eine Kühleinrichtung einer Verbrennungskraftmaschine eines Kraftwagens, mit einer Schmiermittelkühleinrichtung mit einer ersten Kanalanordnung, einer zweiten Kanalanordnung eines Kurbelgehäuses, einer dritten Kanalanordnung eines Zylinderkopfs, einer vierten Kanalanordnung eines Abgasrückführventils, einer fünften Kanalanordnung eines Abgasrückführkühlers, einer sechsten Kanalanordnung eines Dosierventils, einer siebten Kanalanordnung einer Kraftstoffkühleinrichtung und einer achten Kanalanordnung eines Luftverdichters.

Dokument DE 10 2013 113 813 A1 offenbart eine Steckverbinderanordnung zum Anbinden einer medienführenden Fluidleitung eines Kraftfahrzeugs, vorgesehen mit einem Stecker zur Verbindung mit der Fluidleitung, wobei der Stecker einen Fluidkanal zur Durchfuhr eines zu fördernden Mediums zur Fluidleitung aufweist, und einem mit dem Fluidkanal kommunizierenden und den Stecker kontaktierenden Drosselkörper. Der Drosselkörper weist einen Drosselkanal zur Durchfuhr des zu fördernden Mediums zur Fluidleitung auf.

Dokument EP 1 253 303 A2 offenbart eine durch Flüssigkeit gekühlte Hubkolbenbrennkraftmaschine mit einem Zylinderkopf und einem Zylinderblock, deren Kühlflüssigkeitsräume über getrennte Einlassleitungen an einem Kühlkreislauf angeschlossen sind, der mindestens eine Wasserpumpe, einen Kühler mit einem Lüfter enthält. Die Wasserpumpe fördert über eine Druckleitung Kühlflüssigkeit zu den Einlassleitungen und mindestens in einer Einlassleitung ist ein Regelventil angeordnet, das den Volumenstrom in Abhängigkeit von Betriebsparametern der Hubkolbenbrennkraftmaschine steuert. Die Kühlflüssigkeitsräume des Zylinderkopfs und des Zylinderblocks sind voneinander getrennt und über getrennte Auslassleitungen an einer gemeinsamen Rückströmleitung angeschlossen.

Der Erfindung liegt die Aufgabe zu Grunde, ein alternatives und/oder verbessertes Kühlsystem für eine Antriebsvorrichtung zu schaffen.

Die Aufgabe wird gelöst durch die Merkmale der unabhängigen Ansprüche. Vorteilhafte Weiterbildungen sind in den abhängigen Ansprüchen und der Beschreibung angegeben.

Die Erfindung schafft ein Kühlsystem (z. B. Kühlkreislauf) zum Führen eines Kühlmittels (z. B. umfassend Öl oder Wasser oder ein Wasser-Kühlwasser-Additiv-Gemisch) für Fahrzeuge (z. B. Nutzfahrzeuge) oder stationäre Anlagen. Das Kühlsystem weist eine Antriebsvorrichtung mit mindestens einem Kühlkanal, der mit dem Kühlmittel zum Kühlen der Antriebsvorrichtung durchströmbar ist, auf. Das Kühlsystem weist einen ersten Kühlmittelvolumenbereich auf, der (z. B. direkt) stromabwärts von dem mindestens einen Kühlkanal zum Sammeln des Kühlmittels von dem mindestens einen Kühlkanal angeordnet ist und mehrere Ausgänge zur Verteilung des Kühlmittels aufweist (z. B. für weitere Wärmeübertrager und/oder zu temperierende (d. h. zu kühlende und/oder zu beheizende) Komponenten des Kühlsystems). Das Kühlsystem weist einen zweiten Kühlmittelvolumenbereich auf, der (z. B. direkt) stromabwärts von dem ersten Kühlmittelvolumenbereich angeordnet ist, das von dem ersten Kühlmittelvolumenbereich verteilte Kühlmittel (z. B. von den weiteren Wärmeübertragern des Kühlsystems und/oder den zu temperierenden Komponenten) zumindest teilweise sammelt und einen Ausgang zum Rezirkulieren des Kühlmittels aufweist. Das Kühlsystem weist eine Aufnahmeeinrichtung auf, die in einer direkten Fluidverbindung zwischen dem ersten Kühlmittelvolumenbereich und dem zweiten Kühlmittelvolumenbereich angeordnet und zum wahlweisen Aufnehmen oder Weglassen eines Wechseleinsatzes zum Blockieren, Begrenzen und/oder Einstellen eines Kühlmittelvolumenstroms durch die direkte Fluidverbindung ausgebildet ist.

Das Kühlsystem gemäß der vorliegenden Offenbarung erlaubt es, durch Variation von nur einem Bauteil (d. h. dem Wechseleinsatz) eine bedarfsgerechte, flexible Konfiguration des Kühlsystems zu schaffen, wobei wahlweise unterschiedliche Kühlsystemkomponenten anforderungsgerecht kombiniert werden können. Die Aufnahmeeinrichtung ermöglicht bspw. die Konstruktion einer Sammel- und Verteilungsleitung, die den ersten Kühlmittelvolumenbereich und den zweiten Kühlmittelvolumenbereich aufweist und als Gleichteil für eine Vielzahl unterschiedlicher Varianten der Antriebsvorrichtung und weiterer, mit Kühlmittel zu versorgenden Komponenten verwendet werden kann. Die Aufnahmeeinrichtung in der direkten Fluidverbindung zwischen dem ersten und zweiten Kühlmittelvolumenbereich ermöglicht die Aufnahme des Wechseleinsatzes, der wahlweise angeordnet oder weggelassen werden kann, nämlich in Abhängigkeit von einer Anzahl, einer Art und/oder einem Kühlmittelbedarf der Wärmeübertrager und/oder der zu temperierenden Komponenten des Kühlsystems des Kühlsystems stromabwärts der Antriebsvorrichtung. Dies hat zum Vorteil, dass zum einen Produktions- und Bauteilkosten gespart werden können, da nur ein einfach zu produzierender Wechseleinsatz zu variieren ist. Hierdurch kann flexibel auf Markt- und/oder Gesetzesanforderungen reagiert werden. Zum anderen kann durch die richtige Wahl des Wechseleinsatzes die Leistungsaufnahme der Kühlmittelpumpe reduziert werden, da durch die optimale Wahl des Strömungsquerschnitts durch die Blendenöffnung(en) des Wechseleinsatzes die Kühlmittelpumpe entlastet werden kann. Wird in der Auslegung einer Variante des Kühlsystems ersichtlich, dass generell auf einen Wechseleinsatz verzichtet werden kann, so kann bspw. die Aufnahmeeinrichtung einfach frei bleiben.

Zweckmäßig kann die Aufnahmeeinrichtung als Nut, z. B. Umfangsnut, oder Halterung für den Wechseleinsatz ausgeführt sein, z. B. zum lösbaren Aufnehmen des Wechseleinsatzes, möglicherweise mit lösbaren Haltemitteln für den Wechseleinsatz.

In einem Ausführungsbeispiel weist die Antriebsvorrichtung eine Brennkraftmaschine (z. B. Turbine oder Kolbenmotor) auf, die einen oder mehrere des mindestens einen Kühlkanals zum Kühlen den Brennkraftmaschine aufweist. Alternativ oder zusätzlich weist die Antriebsvorrichtung einen Elektroantrieb, der einen oder mehrere des mindestens einen Kühlkanals zum Kühlen des Elektroantriebs aufweist, und/oder einen Brennstoffzellenantrieb, der einen oder mehrere des mindestens einen Kühlkanals zum Kühlen des Brennstoffzellenantriebs aufweist, auf.

In einem bevorzugten Ausführungsbeispiel weist die Antriebsvorrichtung einen Motorblock auf, der einen oder mehrere des mindestens einen Kühlkanals zum Kühlen des Motorblocks aufweist. Alternativ oder zusätzlich weist die Antriebsvorrichtung einen Zylinderkopf (z. B. Einzylinder-Zylinderkopf oder Mehrzylinder-Zylinderkopf) auf, der einen oder mehrere des mindestens einen Kühlkanals zum Kühlen des mindestens einen Zylinderkopfes aufweist.

In einem weiteren Ausführungsbeispiel sind der erste Kühlmittelvolumenbereich, der zweite Kühlmittelvolumenbereich und/oder die Aufnahmeeinrichtung in einer gemeinsamen Sammel- und Verteilungsleitung umfasst. Alternativ können der erste Kühlmittelvolumenbereich und der zweite Kühlmittelvolumenbereich bspw. in unterschiedlichen Bauteilen umfasst sein.

In einer Ausführungsform weist das Kühlsystem den Wechseleinsatz auf, der in der Aufnahmeeinrichtung angeordnet ist und die direkte Fluidverbindung blockiert, (z. B. passiv) begrenzt und/oder (z. B. aktiv) einstellt.

Zweckmäßig kann mittels des Wechseleinsatzes ein Kühlmittelvolumenstrom von dem ersten Kühlmittelvolumenbereich zu dem zweiten Kühlmittelvolumenbereich blockiert, begrenzt und/oder eingestellt werden.

In einer Weiterbildung ist der Wechseleinsatz aus einer Gruppe von Wechseleinsätzen ausgewählt, die sich untereinander in einem Strömungsquerschnitt des Wechseleinsatzes unterscheiden (z. B. durch eine oder mehrere Blendenöffnungen im Wechseleinsatz).

In einer weiteren Ausführungsform umfasst die Gruppe von Wechseleinsätzen passive oder starre Wechseleinsätze, einen im Strömungsquerschnitt einstellbaren oder steuerbaren Blendeneinsatz und/oder einen Wandeinsatz oder Blendeneinsatz zum im Wesentlichen vollständigen Blockieren des Kühlmittelvolumenstroms durch die direkte Fluidverbindung.

In einer Ausführungsvariante weist das Kühlsystem ferner einen Retarder-Wärmeübertrager oder einen Kühlmittel-Retarder (z. B. Wasser-Retarder) auf, der (z. B. direkt) stromabwärts von einem der mehreren Ausgänge des ersten Kühlmittelvolumenbereichs und (z. B. direkt) stromaufwärts von einem Eingang des zweiten Kühlmittelvolumenbereichs angeordnet ist. Das Kühlsystem weist ferner einen AGR-Wärmeübertrager (Abgasrückrührungssystem-Wärmeübertrager) auf, der (z. B. direkt) stromabwärts von einem der mehreren Ausgänge des ersten Kühlmittelvolumenbereichs und (z. B. direkt) stromaufwärts von einem Eingang des zweiten Kühlmittelvolumenbereichs angeordnet ist. Die Verwendung eines Wechseleinsatzes mit keiner oder nur sehr kleinen Durchtrittsöffnungen führen dazu, sodass im Wesentlichen kein Volumenstrom direkt zwischen den Kühlmittelvolumenbereichen erfolgt. Hierdurch wird sichergestellt, dass nahezu der komplette Kühlmittelvolumenstrom stromabwärts der Antriebsvorrichtung durch den AGR-Wärmeübertrager und den Retarder-Wärmeübertrager oder Kühlmittelretarderströmt, die beide einen großen Kühlbedarf aufweisen können.

In einer anderen Ausführungsvariante weist das Kühlsystem einerseits entweder einen Retarder-Wärmeübertrager oder einen Kühlmittel-Retarder (z. B. Wasser-Retarder), der (z. B. direkt) stromabwärts von einem der mehreren Ausgänge des ersten Kühlmittelvolumenbereichs und (z. B. direkt) stromaufwärts von einem Eingang des zweiten Kühlmittelvolumenbereichs angeordnet ist, oder andererseits einen AGR-Wärmeübertrager (Abgasrückrührungssystem-Wärmeübertrager), der (z. B. direkt) stromabwärts von einem der mehreren Ausgänge des ersten Kühlmittelvolumenbereichs und (z. B. direkt) stromaufwärts von einem Eingang des zweiten Kühlmittelvolumenbereichs angeordnet ist, auf. Hier kann der Wechseleinsatz als ein, vorzugsweise starrer, Blendeneinsatz zum Begrenzen des Kühlmittelvolumenstroms durch die direkte Fluidverbindung ausgebildet sein.

In einer weiteren Ausführungsvariante weist das Kühlsystem weder einen Retarder-Wärmeübertrager, einen Kühlmittel-Retarder (z. B. Wasser-Retarder) noch einen AGR-Wärmeübertrager (Abgasrückrührungssystem-Wärmeübertrager) auf und die Aufnahmeeinrichtung ist frei von dem Wechseleinsatz, sodass zweckmäßig der Kühlmittelvolumenstrom durch die direkte Fluidverbindung im Wesentlichen vollständig freigegeben ist. Alternativ kann die Aufnahmeeinrichtung mit einem Wechseleinsatz versehen sein, der eine Durchgangsöffnung aufweist, die den Kühlmittelvolumenstrom durch die direkte Fluidverbindung im Wesentlichen vollständig freigibt.

In einem Ausführungsbeispiel weist das Kühlsystem einen dritten Kühlmittelvolumenbereich, der (z. B. direkt) stromaufwärts von mindestens einem Zylinderkopf der Antriebsvorrichtung angeordnet ist, und einen vierten Kühlmittelvolumenbereich, der (z. B. direkt) stromaufwärts von einem Motorblock der Antriebsvorrichtung angeordnet ist, auf. Das Kühlsystem weist ferner ein Blendenelement auf, das in einer direkten Fluidverbindung zwischen dem dritten Kühlmittelvolumenbereich und dem vierten Kühlmittelvolumenbereich zum Vorgeben eines Kühlmittelvolumenstroms zwischen dem dritten Kühlmittelvolumenbereich und dem vierten Kühlmittelvolumenbereich angeordnet ist. Dieses Ausführungsbeispiel kann auch unabhängig von einem Vorsehen des ersten Kühlmittelvolumenbereichs, des zweiten Kühlmittelvolumenbereichs und der Aufnahmeeinrichtung vorgesehen sein.

Es ist möglich, dass der Kühlmittelvolumenstrom direkt in den dritten Kühlmittelvolumenbereich oder in den dritten Kühlmittelvolumenbereich oder in beide parallel einströmt. In einer Weiterbildung sind der dritte Kühlmittelvolumenbereich, der vierte Kühlmittelvolumenbereich und das Blendenelement in einer gemeinsamen Kühlmittelverteilungsleitung umfasst.

In einem weiteren Ausführungsbeispiel ist das Blendenelement im Strömungsquerschnitt einstellbar oder starr und/oder das Blendenelement ist wechselbar ausgeführt.

In einem weiteren Ausführungsbeispiel ist das Blendenelement aus einer Gruppe von Blendenelementen ausgewählt, die sich untereinander in einem Strömungsquerschnitt durch das Blendenelement unterscheiden.

Zweckmäßig können der Motorblock und der mindestens eine Zylinderkopf zumindest teilweise parallel mit Kühlmittel durchströmt sein und mittels des Blendenelements kann der Kühlmittelvolumenstrom von dem dritten Kühlmittelvolumenbereich zu dem vierten Kühlmittelvolumenbereich vorgebbar sein.

Es ist auch möglich, dass der Motorblock und der mindestens eine Zylinderkopf zumindest teilweise seriell mit Kühlmittel durchströmt sind.

In einer Ausführungsform weist das Kühlsystem mehrere Wärmeübertrager und/oder zu temperierende Komponenten auf, die (z. B. direkt) stromabwärts der mehreren Ausgänge des ersten Kühlmittelvolumenbereichs angeordnet sind.

In einer weiteren Ausführungsform weist das Kühlsystem eine Kühlmittelpumpe, die stromaufwärts von der Antriebsvorrichtung angeordnet ist, ein Thermostat, das stromabwärts von dem zweiten Kühlmittelvolumenbereich angeordnet ist, und/oder einen Kühlmittelkühler, der stromabwärts von dem zweiten Kühlmittelvolumenbereich angeordnet ist, auf.

Die Erfindung betrifft auch ein Kraftfahrzeug, vorzugsweise ein Nutzfahrzeug (z. B. Lastkraftwagen oder Omnibus), mit einem Kühlsystem wie hierin offenbart.

Es ist bspw. auch möglich, das Kühlsystem wie hierin offenbart für Personenkraftwagen, Großmotoren, geländegängige Fahrzeuge, stationäre Anlagen, Marinemotoren usw. zu verwenden.

Die Erfindung betrifft auch eine Sammel- und Verteilungsleitung für ein Kühlsystem zum Kühlen einer Antriebsvorrichtung. Die Sammel- und Verteilungsleitung weist einen ersten Kühlmittelvolumenbereich auf, der einen oder mehrere Eingänge zum Sammeln von Kühlmittel und mehrere Ausgänge zur Verteilung des Kühlmittels aufweist. Die Sammel- und Verteilungsleitung weist einen zweiten Kühlmittelvolumenbereich auf, der (z. B. direkt) stromabwärts von dem ersten Kühlmittelvolumenbereich angeordnet ist, einen oder mehrere Eingänge zum Sammeln von Kühlmittel und mindestens einen Ausgang zum Rezirkulieren des Kühlmittels aufweist. Die Sammel- und Verteilungsleitung weist eine Aufnahmeeinrichtung auf, die in einer direkten Fluidverbindung zwischen dem ersten Kühlmittelvolumenbereich und dem zweiten Kühlmittelvolumenbereich angeordnet und zum wahlweisen Aufnehmen oder Weglassen eines Wechseleinsatzes zum Blockieren, Begrenzen und/oder Einstellen eines Kühlmittelvolumenstroms durch die direkte Fluidverbindung ausgebildet ist.

Zweckmäßig kann die Sammel- und Verteilungsleitung (z. B. direkt) stromaufwärts oder (z. B. direkt) stromabwärts der Antriebsvorrichtung angeordnet sein.

Vorzugsweise kann die Sammel- und Verteilungsleitung den Wechseleinsatz aufweisen, der bspw. wie hierin offenbart ausgeführt sein kann.

Es ist möglich, dass die Sammel- und Verteilungsleitung in einem Fahrzeug oder einer stationären Anlage umfasst ist.

Die Erfindung betrifft auch ein Verfahren zum Konfigurieren eines Kühlsystems, vorzugsweise für ein Kraftfahrzeug. Das Verfahren weist ein Bereitstellen eines Kühlsystems wie hierin offenbart auf. Das Verfahren weist ein Anordnen mehrerer Wärmeübertrager und/oder zu temperierender Komponenten (z. B. direkt) stromabwärts von den mehreren Ausgängen des ersten Kühlmittelvolumenbereichs auf. Das Verfahren weist ein wahlweises Anordnen oder Weglassen des Wechseleinsatzes in der Aufnahmeeinrichtung in Abhängigkeit von einer Anzahl, einer Art und/oder einem Kühlmittelbedarf der mehreren Wärmeübertrager und/oder zu temperierenden Komponenten auf.

In einer Weiterbildung weisen die mehreren Wärmeübertrager und/oder zu temperierender Komponenten einen Retarder-Wärmeübertrager, einen Kühlmittel-Retarder und/oder einen AGR-Wärmeübertrager auf.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Darstellung eines beispielhaften Kühlsystems gemäß der vorliegenden Offenbarung; und
- Figur 2: eine Ausführungsvariante eines Teilbereichs des beispielhaften Kühlsystems.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

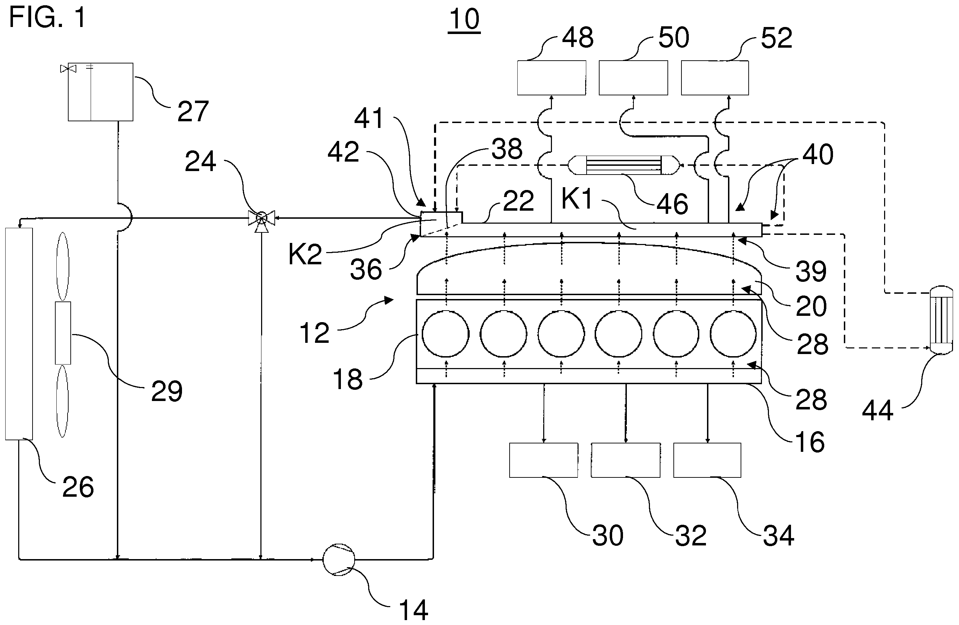

Die Figur 1 zeigt ein Kühlsystem 10 für eine Antriebsvorrichtung 12. Vorzugsweise ist die Antriebsvorrichtung 12 als eine Brennkraftmaschine, z. B. eine Kolbenbrennkraftmaschine oder eine Turbine, ausgeführt. Nachfolgend ist ein besonders bevorzugtes Ausführungsbeispiel des Kühlsystems 10 für eine als Kolbenbrennkraftmaschine ausgeführte Antriebsvorrichtung 12 für ein Kraftfahrzeug, vorzugsweise ein Nutzfahrzeug, z. B. Lastkraftwagen oder Omnibus, beschrieben. Es ist allerdings auch möglich, dass die Antriebsvorrichtung 12 bspw. als eine Elektro- Antriebsvorrichtung, eine Hybrid- Antriebsvorrichtung oder eine Brennstoffzellen- Antriebsvorrichtung ausgebildet ist. Die Antriebsvorrichtung 12 kann auf jegliche Weise angetrieben sein, z. B. mit Diesel, Benzin, Brenngas, Wasserstoff, Methan, elektrischem Strom usw.. Die Antriebsvorrichtung 12 kann in einem Landfahrzeug (z. B. Kraftfahrzeug, Nutzfahrzeug, Schienenfahrzeug) oder Wasserfahrzeug oder einer stationären Anlage, z. B. zum Antreiben eines Generators, umfasst sein.

Das Kühlsystem 10 kann zweckmäßig eine Kühlmittelpumpe 14, eine Verteilungsleitung 16, einen Motorblock 18 der Antriebsvorrichtung 12, einen oder mehrere Zylinderköpfe 20 der Antriebsvorrichtung 12, eine Sammel- und Verteilungsleitung 22, ein Thermostat (oder ein Regelventil) 24 und ein Kühlmittelkühler 26 aufweisen. Im Kühlsystem 10 kann ein flüssiges Kühlmittel, z. B. ein Wasser oder Kühlwasser-Additiv-Gemisch oder Öl, zirkulieren. Das Kühlsystem 10 kann ferner einen Ausgleichsbehälter 27 aufweisen. Im Kühlmittelkühler 26 kann das aufgewärmte Kühlmittel z. B. durch Fahrtwind und/oder unterstützt durch ein Gebläse 29 gekühlt werden.

Die Kühlmittelpumpe 14 ist stromaufwärts der Verteilungsleitung 16 und der Antriebsvorrichtung 12 angeordnet. Die Kühlmittelpumpe 14 dient zum Fördern des Kühlmittels durch das Kühlsystem 10. Die Kühlmittelpumpe 14 kann das Kühlmittel zu der Verteilungsleitung 16 fördern. Die Kühlmittelpumpe 14 kann als Hauptkühlmittelpumpe angeordnet sein. Die Kühlmittelpumpe 14 kann als eine starre Pumpe oder eine regelbare Pumpe ausgeführt sein. Beispielsweise kann eine regelbare Pumpe in Form einer Elektro-Pumpe, einer mechanische Pumpe mit Viscokupplung oder einer X-Gang-Pumpe ausgeführt sein, wobei das X für beliebig viele Stufen steht.

Die Verteilungsleitung 16 und die Sammel- und Verteilungsleitung 22 stellen konstruktiv zwei geometrischen Volumen für das Kühlmittel dar, nämlich stromaufwärts und stromabwärts der Antriebsvorrichtung 12. Die Verteilungsleitung 16 weist als primäre Funktion die Verteilung des Kühlmittels zur Antriebsvorrichtung 12 (z. B. Motorblock 18 und Zylinderkopf 20) auf. Die primäre Funktion der Sammel- und Verteilungsleitung 22 ist es, das Kühlmittel am Austritt aus der Antriebsvorrichtung 12 (z. B. Motorblock 18 und Zylinderkopf 20) zu sammeln. Es ist auch möglich, dass die Sammel- und Verteilungsleitung 22 Kühlmittel von Komponenten sammelt, zu denen sie selbst das Kühlmittelverteilt hat. In den Leitungen 16 und 22 kann sich im Betrieb jeweils eine im Wesentlichen eine homogene Temperatur des Kühlmittels ein. Die beiden Leitungen 16 und 22 bilden zwei unterschiedliche Temperaturniveaus. In der Verteilungsleitung 16 ist die Temperatur des Kühlmittels zumindest um den Wärmeeintrag der Antriebsvorrichtung 12 niedriger als in der Sammel- und Verteilungsleitung 22. Z. B. kann die Kühlmitteltemperatur in der Sammel- und Verteilungsleitung 22 um 10 K bis 15 K höher als in der Verteilungsleitung 16 sein. Das ermöglicht, dass man aus den zwei unterschiedlichen Temperaturniveaus verschiedene Nebenaggregate mit Kühlmittel versorgen kann, die unterschiedliche Kühlmitteltemperaturniveaus und Kühlmittelbetriebsdrücke brauchen. Es ist möglich, dass die zu temperierenden Komponenten teilweise keine herkömmlichen Wärmeübertrager aufweisen. Stattdessen können sie nur umströmt werden oder umströmte Kühlrippen aufweisen. Z. B. kann für einen Luftpresser eines Fahrzeugs ein Kühlmittelteilmassenstrom aus der Verteilungsleitung 16 abgezweigt werden. Aus der Sammel- und Verteilungsleitung 22 kann bspw. ein Kühlmittelteilmassenstrom zu einem Wärmeübertrager einer Innenraumheizung, z. B. Insassen-, Arbeitsplatz-, Passagier- oder Fahrerhausheizung, abgezweigt werden. Es ist möglich, dass die Verteilungsleitung 16 als Verteilungsleiste und die Sammel- und Verteilungsleitung 22 als Sammel- und Verteilungsleiste ausgebildet ist.

Die Verteilungsleitung 16 ist stromabwärts der Kühlmittelpumpe 14 und stromaufwärts der Antriebsvorrichtung 12 angeordnet. Die Verteilungsleitung 16 verteilt das von der Kühlmittelpumpe 14 geförderte Kühlmittel zu unterschiedlichen Komponenten. Die Verteilungsleitung 16 kann das Kühlmittel zu Kühlkanälen 28 (mit Pfeilen in Fig. 1 angedeutet) in dem Zylinderkopf 20 und dem Motorblock 18. Im Ausführungsbeispiel ist der Zylinderkopf 20 als ein Mehrzylinder-Zylinderkopf ausgebildet. Es ist auch möglich, dass mehrere Zylinderköpfe 20 bspw. als Einzylinder-Zylinderköpfe umfasst sind. Die interne Kühlmitteldurchströmung des Zylinderkopfes 20 und des Motorblocks 18 mittels der Kühlkanäle 28 kann unterschiedlich realisiert werden.

Beispielsweise ist eine parallele Durchströmung des Zylinderkopfes 20 und des Motorblocks 18 möglich. Hierbei findet eine separate Durchströmung der Kühlkanäle 28 des Zylinderkopfes 20 und des Motorblocks 18 statt. Die Teilkühlmittelmassenströme sind in den beiden Bauteilen nicht hydraulisch gemischt. Aus der Verteilungsleitung 16 werden separate Kühlmittelvolumenströme durch den Zylinderkopf 20 und den Motorblock 18 aufgeteilt und erst in der Sammel- und Verteilungsleitung 22 wieder zusammengeführt. Eine parallele Durchströmung kann als ein sogenanntes horizontales oder vertikales Durchströmungskonzept realisiert sein.

Es ist auch eine serielle Durchströmung des Kühlmittels durch den Zylinderkopf 20 und den Motorblock 18 möglich. Der Kühlmittelmassenstrom durchströmt zunächst eine Komponente und nimmt Abwärme auf. Anschließend wird die andere Komponente durchströmt und deren Abwärme aufgenommen. Die Strömungsart des Kühlmittels kann bei der seriellen Durchströmung in der vertikalen Reihenfolge als "top-down"-Konfiguration, d. h. von oben (Zylinderkopf 20) nach unten (Motorblock 18), oder als "bottom-up"- Konfiguration, d. h. von unten (Motorblock 18) nach oben (Zylinderkopf 20), ausgeführt werden.

Es ist auch eine teilweise parallele und teilweise serielle Durchströmung denkbar.

Aus der Verteilungsleitung 16 können weitere Komponenten 30, 32, 34 mit Kühlmittel versorgt werden, wenn gewünscht. Die Komponenten 30, 32, 34 können in Abhängigkeit von einem von der jeweiligen Komponente benötigten Kühlmittelmassenstrom (Druckniveau) und einem von der Komponente benötigten Temperaturniveau ausgewählt werden. Die Komponenten 30, 32, 34 können zweckmäßig Wärmeübertrager von Motorkomponenten 30, Fahrzeugkomponenten 32 und Aufbauerkomponenten 34 für einen Fahrzeugaufbau (z. B. einen Kühlkammeraufbau als eines von einer Vielzahl von möglichen Beispielen) umfassen.

Nach der Durchströmung der Antriebsvorrichtung 12 wird das Kühlmittel in der Sammel- und Verteilungsleitung 22 gesammelt. Das Kühlmittel strömt durch die Eingänge 39 der Sammel- und Verteilungsleitung 22 in die Sammel- und Verteilungsleitung 22 ein. Zweckmäßig ist die Sammel- und Verteilungsleitung 22 stromabwärts der Antriebsvorrichtung 12 und stromaufwärts des Thermostats 24, des Kühlmittelkühlers 26 und der Kühlmittelpumpe 14 angeordnet. Die Sammel- und Verteilungsleitung 22 kann das Kühlmittel zu weiteren Komponenten verteilen.

Gemäß der vorliegenden Offenbarung weist die Sammel- und Verteilungsleitung 22 eine Aufnahmeeinrichtung 36 für einen Wechseleinsatz 38 auf. Die Aufnahmeeinrichtung 36 ermöglicht die Konstruktion einer Sammel- und Verteilungsleitung 22 in einer einfachen Ausgestaltung, die als Gleichteil für eine Vielzahl unterschiedlicher Varianten der Antriebsvorrichtung 12 und weiterer, mit Kühlmittel zu versorgenden Komponenten verwendet werden kann. Die Aufnahmeeinrichtung 36 kann bspw. in Form einer Nut, z. B. einer Umfangsnut, oder einer Halterung in der Sammel- und Verteilungsleitung 22 ausgebildet sein.

Durch die Aufnahmeeinrichtung 36 kann der Wechseleinsatz 38, wenn gewünscht, in die Sammel- und Verteilungsleitung 22 eingebracht werden. Hierdurch entstehen zwei Kühlmittelvolumenbereiche K1 und K2 innerhalb der Sammel- und Verteilungsleitung 22. Die beiden Kühlmittelvolumenbereiche K1 und K2 können übereinander und/oder nebeneinander oder in jeglicher anderen geometrisch vorstellbaren Weise zueinander angeordnet sein. In dem ersten Kühlmittelvolumenbereich K1 wird das Kühlmittel stromabwärts der Antriebsvorrichtung 12 gesammelt. Aus dem Kühlmittelvolumenbereich K1 kann das Kühlmittel über mehrere Ausgänge 40 in Richtung zu weiteren, mit Kühlmittel zu versorgenden Komponenten strömen. In dem zweiten Kühlmittelvolumenbereich K2 wird das Kühlmittel nach der Kühlung der weiteren Komponenten zumindest teilweise wieder gesammelt. Das verteilte Kühlmittel kann über einen oder mehrere Eingänge 41 in den Kühlmittelvolumenbereich K2 einströmen und darin gesammelt werden. Es ist auch möglich, dass Kühlmittel von einigen der weiteren Komponenten erst stromabwärts des zweiten Kühlmittelvolumenbereichs B2 wieder zurückgeführt wird. Der zweite Kühlmittelvolumenbereich B2 weist einen Ausgang 42 auf, aus dem das gesammelte Kühlmittel zum Rezirkulieren des Kühlmittels ausströmt. Das Kühlmittel kann bspw. je nach Stellung des Thermostats 24 in Richtung des Kühlmittelkühlers 26 oder direkt vor die Kühlmittelpumpe 14 geführt werden. Hierbei ist es unerheblich ob es sich beim Thermostat 24 bspw. um ein Motoraustrittsthermostat, wie in Figur 1 dargestellt, oder ein Motoreintrittsthermostat handelt. Handelt es sich um ein Motoraustrittsthermostat, so könnte der zweite Kühlmittelvolumenbereich K2 in einer Ausführungsform in ein Gehäuse des Thermostats 24, das bspw. in die Sammel- und Verteilungsleitung 22 integriert ist, integriert sein. Das Thermostat 24 kann aktiv oder passiv regelbar oder nicht regelbar sein.

Die beiden Kühlmittelvolumenbereiche K1 und K2 innerhalb der Sammel- und Verteilungsleitung 22 können durch Aufnahme des Wechseleinsatzes 38 vollständig, teilweise oder gar nicht voneinander getrennt sein. Der Wechseleinsatz 38 kann bspw. lösbar oder unlösbar in der Aufnahmeeinrichtung 36 angeordnet werden und von der Aufnahmeeinrichtung 36 gehalten werden. Es ist auch möglich, gar keinen Wechseleinsatzes 38 bei der Montage der Sammel- und Verteilungsleitung 22 in der Aufnahmeeinrichtung 36 vorzusehen, sodass die Kühlmittelvolumenbereiche K1 und K2 gar nicht voneinander getrennt sind. In anderen Worten ist die Aufnahmeeinrichtung 36 in einer direkten Fluidverbindung zwischen den Kühlmittelvolumenbereichen K1 und K2 angeordnet ist, sodass, wenn gewünscht, durch Einsetzen des Wechseleinsatzes 38 ein direkter Volumenstrom zwischen den Kühlmittelvolumenbereichen K1 und K2 je nach Anforderung der Variante des Kühlsystems 10 blockiert, begrenzt oder eingestellt werden kann.

Der Wechseleinsatz 38 kann aus einer Gruppe von verfügbaren Wechseleinsätzen ausgewählt sein, die sich untereinander in einem Strömungsquerschnitt des jeweiligen Wechseleinsatzes 38 unterscheiden, z. B. durch unterschiedlich große Blendenöffnungen im jeweiligen Wechseleinsatzes 38. Die Gruppe von Wechseleinsätzen kann passive oder starre Wechseleinsätze, einen im Strömungsquerschnitt einstellbaren (steuerbaren) Blendeneinsatz und/oder einen Wandeinsatz oder Blendeneinsatz zum im Wesentlichen vollständigen Blockieren des Kühlmittelvolumenstroms zwischen den Kühlmittelvolumenbereichen K1 und K2 durch die direkte Fluidverbindung aufweisen.

Über die Ausgestaltung des Wechseleinsatzes 38 kann eine ausreichende Versorgung der Komponenten stromabwärts der Ausgänge 40 mit Kühlmittel aus dem ersten Kühlmittelvolumenbereich B1 sichergestellt werden, wobei die Kühlmittelpumpe 14 soweit wie möglich entlastet wird. Wie nachfolgend beschrieben, handelt es sich hierbei bevorzugt um einen Retarder-Wärmeübertrager oder einen Kühlmittel-Retarder (z. B. Wasser-Retarder) 44 und/oder einen AGR-Wärmeübertrager 46. Der Retarder-Wärmeübertrager oder Kühlmittel-Retarder 44 ist zur Kühlung eines Retarders bzw. dessen Funktionsweise, z. B. verschleißfreie oder elektrodynamische Dauerbremse oder Kupplung, eines Kraftfahrzeugs ausgebildet. Der AGR-Wärmeübertrager 46 ist zur Kühlung von Abgas in einem Abgasrückführungssystem, über den zumindest ein Teil der Verbrennungsabgase in eine Luftzufuhr einleitbar ist, ausgebildet. Der Retarder-Wärmeübertrager oder Kühlmittel-Retarder 44 und der AGR-Wärmeübertrager 46 können parallel oder in Reihe im Kühlsystem 10 stromabwärts der Sammel- und Verteilungsleitung 22 angeordnet sein. Nachfolgend wird der Einfachheit halber nur auf Ausführungen mit oder ohne Retarder-Wärmeübertrager oder Kühlmittel-Retarder 44 und AGR-Wärmeübertrager 46 eingegangen, wobei jedoch ausdrücklich alternative oder zusätzliche, zu kühlende Komponenten analog dem Retarder-Wärmeübertrager oder Kühlmittel-Retarder 44 und AGR-Wärmeübertrager 46 im Kühlsystem 10 berücksichtigt sein können.

Für Varianten, die sowohl einen Retarder mit Retarder-Wärmeübertrager oder Kühlmittel-Retarder 44 als auch einen AGR-Wärmeübertrager 46 aufweisen, kann beispielsweise ein Wechseleinsatz mit keiner oder nur sehr kleinen Durchtrittsöffnungen verwendet werden, sodass im Wesentlichen kein Volumenstrom direkt zwischen den Kühlmittelvolumenbereichen K1 und K2 erfolgt. Hierdurch wird sichergestellt, dass nahezu der komplette Kühlmittelvolumenstrom stromabwärts der Antriebsvorrichtung 12 durch den AGR-Wärmeübertrager 46 und den Retarder-Wärmeübertrager oder Kühlmittel-Retarder44 strömt. Beide Komponenten können einen großen Kühlbedarf und/oder Kühlmittelvolumenstrombedarf aufweisen.

Für Varianten, in welchen entweder nur der Retarder-Wärmeübertrager oder Kühlmittel-Retarder 44 oder nur der AGR-Wärmeübertrager 46 umfasst ist, kann durch eine entsprechende Wahl des Wechseleinsatzes 38 mit einem oder mehreren Blendenöffnungen ein Teil des Kühlmittelvolumenstroms parallel zu dem Retarder-Wärmeübertrager oder Kühlmittel-Retarder 44 oder dem AGR-Wärmeübertrager 46 aus dem ersten Kühlmittelvolumenbereich K1 in den zweiten Kühlmittelvolumenbereich K2 geleitet werden. Dies führt zu einem geringeren Druckverlust innerhalb des Kühlsystems 10 und entlastet somit die Kühlmittelpumpe 14, was wiederum zu einer geringeren Leistungsaufnahme führt.

Für Varianten, in welchen nicht auf den AGR-Wärmeübertrager 46 verzichtet werden kann, ist es möglich, z. B. für Märkte mit unterschiedlichen Abgasgesetzgebungen den Kühlmittelvolumenstrom über den AGR-Wärmeübertrager 46 mittels des Wechseleinsatzes 38 einzustellen. Die maximale AGR-Rate bestimmt je nach Motorbetriebskonzept die hierfür benötigte AGR-Kühlung und somit den für den AGR-Wärmeübertrager 46 benötigten Kühlmittelvolumenstrom. Über eine entsprechende Wahl des Wechseleinsatzes 38 mit einer oder mehreren Blendenöffnungen kann der benötigte Kühlmittelvolumenstrom bedarfsgerecht bei der Montage der Sammel- und Verteilungsleitung 22 eingestellt werden.

Für Varianten, in welchen weder der Retarder-Wärmeübertrager oder der Kühlmittel-Retarder 44 noch der AGR-Wärmeübertrager 46 umfasst ist, kann bspw. auf den Wechseleinsatz 38 verzichtet werden. Alternativ kann bspw. ein Wechseleinsatz mit einer dem Bedarf gerechten großen Öffnung verwendet werden.

Aus den obigen Beispielen bezüglich des Retarder-Wärmeübertragers oder des Kühlmittel-Retarders 44 und des AGR-Wärmeübertragers46 ist ersichtlich, dass durch die Wahl eines geeigneten Wechseleinsatzes 38 stets ein bestimmtes Ziel verfolgt wird. Dieses Ziel besteht darin, durch die Variation von nur einem Bauteil (d. h. dem Wechseleinsatz 38) eine bedarfsgerechte Konfiguration des Kühlsystems 10 zu schaffen, wobei unterschiedliche Kühlsystemkomponenten anforderungsgerecht kombiniert werden können. In anderen Worten kann ein Verfahren zum Konfigurieren des Kühlsystems 10 aufweisen, dass der Wechseleinsatz 38 in der Aufnahmeeinrichtung 36 wahlweise angeordnet oder weggelassen wird, nämlich vorzugsweise in Abhängigkeit von einer Anzahl, einer Art und/oder einem Kühlmittelbedarf der mehreren Wärmeübertrager oder Komponenten, die insbesondere an die Ausgänge 40 angeschlossen sind.

Dies hat zum Vorteil, dass zum einen Produktions- und Bauteilkosten gespart werden können, da nur ein einfach zu produzierender Wechseleinsatz 38 zu variieren ist. Hierdurch kann flexibel auf Markt- und/oder Gesetzesanforderungen reagiert werden. Zum anderen kann durch die richtige Wahl des Wechseleinsatzes 38 die Leistungsaufnahme der Kühlmittelpumpe 14 reduziert werden, da durch die optimale Wahl des Strömungsquerschnitts durch die Blendenöffnungen) des Wechseleinsatzes 38 die Kühlmittelpumpe 14 entlastet wird, was wiederum eine entsprechende Antriebsenergie einspart. Wird in der Auslegung des Kühlsystems 10 ersichtlich, dass generell auf einen Wechseleinsatz 38 verzichtet werden kann, so kann bspw. die Aufnahmeeinrichtung 36 einfach frei bleiben.

Die Sammel- und Verteilungsleitung 22 kann beliebig viele Ausgänge 40, z. B. in Form von Anschlussöffnungen, Anschlussstutzen, Schlauchstutzen, Konturen für Schlauchkupplungen, Einschraubgewinden o.a., aufweisen. Die Ausgänge 40 müssen nicht in jeder Variante des Kühlsystems 10 immer offen sein. Die Öffnung der Ausgänge 40 kann in entsprechenden Werkzeugen und/oder Fertigungseinrichtungen vorgehalten sein. Beispielsweise können in Guss- oder Spritzwerkzeugen Schieberelemente oder Wechseleinsätze zum bedarfsgerechten Öffnen und Verschließen der Ausgänge 40 eingesetzt werden. Es ist auch möglich, dass die Ausgänge 40 z. B. teilweise in dem zweiten Kühlmittelvolumenbereich K2 umfasst sind.

Zweckmäßig können einige der Ausgänge 40 zur Versorgung von Wärmeübertragern von Motorkomponenten und/oder zu temperierenden Komponenten 48, Fahrzeugkomponenten 50 und Aufbauerkomponenten 52 vorgesehen sein, die abhängig vom benötigen Kühlmittelmassenstrom (Druckniveau) und Temperaturniveau ausgewählt und mit den Ausgängen 40 verbunden werden können. Zweckmäßig können die Komponenten auch solche Komponenten umfassen, die mit dem aufgeheizten Kühlmittel beheizt werden sollen, z. B. eine Passagier- oder Fahrerheizung, ein Abgasnachbehandlungssystem (z. B. ein System zur selektiven katalytischen Reduktion (SCR-System)) sowie Stell- und Regelelemente.

In einer bevorzugten Ausführungsform sind die beiden Kühlmittelvolumenbereiche K1 und K2 in einem einzigen Bauteil, d. h. bspw. der Sammel- und Verteilungsleitung 22, umfasst. Alternativ ist es jedoch auch denkbar, dass die beiden Kühlmittelvolumenbereiche K1 und K2 in zwei getrennten Bauteilen angeordnet sind, welche wiederum über eine direkte Fluidverbindung direkt miteinander verbunden sind. Die Sammel- und Verteilungsleitung 22 kann ein Gussbauteil sein, wobei auch andere Herstellverfahren denkbar sind. Der Werkstoff der Sammel- und Verteilungsleitung 22 und des Wechseleinsatzes 38 kann frei wählbar sein, z. B. als ein Metallwerkstoff (z. B. Aluminium). Es ist möglich, dass eine Dichtung zwischen dem Wechseleinsatz 38 und der Aufnahmeeinrichtung 36 angeordnet werden kann, um zwischen der Aufnahmeeinrichtung 36 und dem Wechseleinsatz 38 abzudichten, wenn dies bspw. aus funktionstechnischer Sicht notwendig ist. Die Dichtung kann auch in der Aufnahmeeinrichtung 36 oder dem Wechseleinsatz 38 integriert sein.

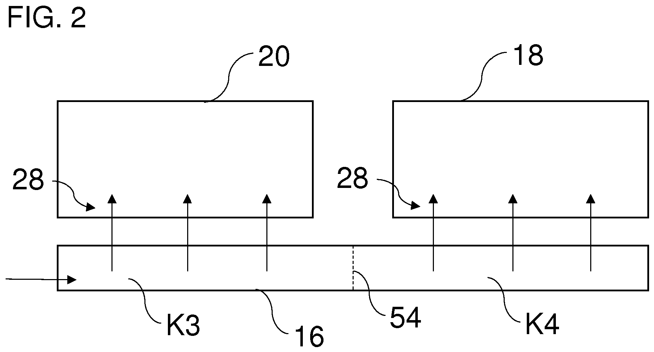

In Figur 2 ist eine Ausführungsvariante für die Verteilungsleitung 16 dargestellt, um die das Kühlsystem 10 gemäß der vorliegenden Offenbarung zweckmäßig ergänzt werden kann oder die auch separat dazu verwendet werden kann. Diese Ausführungsvariante kann insbesondere dann eingesetzt werden, wenn der Zylinderkopf 20 und der Motorblock 18 zumindest teilweise parallel mit Kühlmittel durchströmt werden.

In der Verteilungsleitung 16 kann ein Blendenelement oder ein Blendeneinsatz 54 eingebracht werden. Hierdurch entstehen zwei Kühlmittelvolumenbereiche K3 und K4 innerhalb der Verteilungsleitung 16. Aus dem Kühlmittelvolumenbereiche K3 wird das Kühlmittel über einen oder mehrere Kühlkanäle 28 durch den Zylinderkopf 20 geleitet. Aus dem Kühlmittelvolumenbereiche K4 wird das Kühlmittel über einen oder mehrere Kühlkanäle 28 durch den Motorblock 18 geleitet. Die Kühlmittelvolumenbereiche K3 und K4 können durch das Blendenelement 54 vollständig, teilweise oder gar nicht voneinander getrennt sein. Dabei ist es unerheblich, ob die beiden Kühlmittelvolumenbereiche K3 und K4 übereinander und/oder nebeneinander oder in jeglicher anderen geometrisch vorstellbaren Weise angeordnet sind.

Mittels der Ausgestaltung des Blendenelements 54 kann eine ausreichende Kühlmittelversorgung des Zylinderkopfs 20 und des Motorblocks 18 sichergestellt werden. Bspw. kann das Kühlmittel von der Kühlmittelpumpe 14 über einen Eingang in der Verteilungsleitung 16 in den Kühlmittelvolumenbereich K3 geleitet werden. Über eine bspw. starre oder einstellbare Öffnung des Blendenelements 54 kann über den Kühlmittelvolumenbereich K3 der Kühlmittelvolumenbereich K4 mit Kühlmittel versorgt werden. Wird ein Regelelement verwendet, so kann die Aktivierung beispielsweise zeit-,kühlmitteltemperatur-, und/oder abgastemperaturgesteuert erfolgen und/oder auf Basis jeglicher anderen erfassten Messgröße und deren Kombinationen. Ziel kann es sein, über die bspw. gesteuerte Aufteilung des Kühlmittelvolumenstroms zu dem Zylinderkopf 20 und dem Motorblock 18 die Aufwärmphase der Antriebsvorrichtung 12 zu verkürzen, eine einheitliche Bauteiltemperatur im Betrieb zu gewährleisten und den Druckverlust im Kühlsystem 10, und somit die Leistungsaufnahme der Kühlmittelpumpe 14, so gering wie möglich zu halten.

Die hierin offenbarten Techniken verbessern die Thermomanagement-Funktion des Kühlsystems 10 und können die Leitungsaufnahme reduzieren. Bei Vorsehen eines aktiv steuerbaren Blendenelements 54 kann der Kühlmittelvolumenstroms im Zylinderkopf 20 und im Motorblock 18 aktiv geregelt werden. Der Kühlmittelmassenstroms kann abhängig von einer Motorlast und der thermischen Belastung einzelner Komponenten (z. B.: Luftpresser, Getriebeöl-Wärmeübertrager, Innenraumheizung) angepasst werden. Über die Zuschalthäufigkeiten von regelbaren Komponenten des Kühlsystems 10 (z. B. Kühlmittelpumpe 14 und Gebläse 29) kann die Leitungsaufnahme ebenfalls reduziert werden. Es ist ferner möglich, eine aktive "Warm-up"-Phase der Antriebsvorrichtung 12 zu realisieren. Es ist auch möglich, eine prädiktive Regelung des Thermomanagements in einer holistischen Regelungsstrategie vorzusehen. Die Restabwärme der Antriebsvorrichtung 12 in der Heizungsphase sowie in der Kühlungsphase des Fahrerhauses (z. B.: Adsorptionskälteanlagen für Fahrerhauskühlung) kann ausgenutzt werden. Ferner kann die Funktion der aktiven Steuerung des Kühlmittelmassenstroms in Hybridfahrzeugen (HEV) durch Konditionierung und Heizung/Abkühlung der Antriebsvorrichtung 12 und/oder weiterer Komponenten (z. B. Batterien) in der Stillstandphase ausgenutzt werden. Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen.

### Bezugszeichenliste

- 10: Kühlsystem
- 12: Antriebsvorrichtung
- 14: Kühlmittelpumpe
- 16: Verteilungsleitung
- 18: Motorblock
- 20: Zylinderkopf
- 22: Sammel- und Verteilungsleitung
- 24: Thermostat
- 26: Kühlmittelkühler
- 27: Ausgleichsbehälter
- 28: Kühlkanäle
- 29: Gebläse
- 30: Motorkomponenten
- 32: Fahrzeugkomponenten
- 34: Aufbauerkomponenten
- 36: Aufnahmeeinrichtung
- 38: Wechseleinsatz
- 39: Eingänge
- 40: Ausgänge
- 41: Eingänge
- 42: Ausgang
- 44: Retarder-Wärmeübertrager oder Kühlmittel-Retarder
- 46: AGR-Wärmeübertrager
- 48: Motorkomponenten
- 50: Fahrzeugkomponenten
- 52: Aufbauerkomponenten
- 54: Blendenelement
- K1-K4: Kühlmittelvolumenbereiche

## Patentansprüche

1. Kühlsystem (10) zum Führen eines Kühlmittels für Fahrzeuge oder stationäre Anlagen, aufweisend:
eine Antriebsvorrichtung (12) mit mindestens einem Kühlkanal (28), der mit dem Kühlmittel zum Kühlen der Antriebsvorrichtung (12) durchströmbar ist;
einen ersten Kühlmittelvolumenbereich (K1), der stromabwärts von dem mindestens einen Kühlkanal (28) zum Sammeln des Kühlmittels von dem mindestens einen Kühlkanal (28) angeordnet ist und mehrere Ausgänge (40) zur Verteilung des Kühlmittels aufweist;
einen zweiten Kühlmittelvolumenbereich (K2), der stromabwärts von dem ersten Kühlmittelvolumenbereich (K1) angeordnet ist, das von dem ersten Kühlmittelvolumenbereich (K1) verteilte Kühlmittel zumindest teilweise sammelt und einen Ausgang (42) zum Rezirkulieren des Kühlmittels aufweist; **dadurch gekennzeichnet, dass** das Kühlsystem
eine Aufnahmeeinrichtung (36) aufweist, die in einer direkten Fluidverbindung zwischen dem ersten Kühlmittelvolumenbereich (K1) und dem zweiten Kühlmittelvolumenbereich (K2) angeordnet und zum wahlweisen Aufnehmen oder Weglassen eines Wechseleinsatzes (38) zum Blockieren, Begrenzen und/oder Einstellen eines Kühlmittelvolumenstroms durch die direkte Fluidverbindung ausgebildet ist.

2. Kühlsystem (10) nach Anspruch 1, wobei die Antriebsvorrichtung (12) aufweist:
eine Brennkraftmaschine, die einen oder mehrere des mindestens einen Kühlkanals (28) zum Kühlen den Brennkraftmaschine aufweist; und/oder
einen Elektroantrieb, der einen oder mehrere des mindestens einen Kühlkanals (28) zum Kühlen des Elektroantriebs aufweist; und/oder
einen Brennstoffzellenantrieb, der einen oder mehrere des mindestens einen Kühlkanals (28) zum Kühlen des Brennstoffzellenantriebs aufweist.

3. Kühlsystem (10) nach Anspruch 1 oder Anspruch 2, wobei die Antriebsvorrichtung (12) aufweist:
einen Motorblock (18), der einen oder mehrere des mindestens einen Kühlkanals (28) zum Kühlen des Motorblocks (18) aufweist; und
mindestens einen Zylinderkopf (20), der einen oder mehrere des mindestens einen Kühlkanals (28) zum Kühlen des mindestens einen Zylinderkopfes (20) aufweist.

4. Kühlsystem (10) nach einem der vorherigen Ansprüche, wobei:
der erste Kühlmittelvolumenbereich (K1), der zweite Kühlmittelvolumenbereich (K2) und die Aufnahmeeinrichtung (36) in einer gemeinsamen Sammel- und Verteilungsleitung (22) umfasst sind; oder
der erste Kühlmittelvolumenbereich (K1) und der zweite Kühlmittelvolumenbereich (K2) in unterschiedlichen Bauteilen umfasst sind.

5. Kühlsystem (10) nach einem der vorherigen Ansprüche, ferner aufweisend:
den Wechseleinsatz (38), der in der Aufnahmeeinrichtung (36) angeordnet ist und die direkte Fluidverbindung blockiert, begrenzt und/oder einstellt.

6. Verwendung eines Kühlsystems (10) nach Anspruch 5, wobei: der Wechseleinsatz (38) aus einer Gruppe von Wechseleinsätzen ausgewählt ist, die sich untereinander in einem Strömungsquerschnitt des Wechseleinsatzes (38) unterscheiden,
wobei vorzugsweise:
die Gruppe von Wechseleinsätzen passive oder starre Wechseleinsätze umfasst; und/oder
die Gruppe von Wechseleinsätzen einen im Strömungsquerschnitt einstellbaren oder steuerbaren Blendeneinsatz umfasst; und/oder
die Gruppe von Wechseleinsätze einen Wandeinsatz oder Blendeneinsatz zum im Wesentlichen vollständigen Blockieren des Kühlmittelvolumenstroms durch die direkte Fluidverbindung umfasst.

7. Kühlsystem (10) nach einem der Ansprüche 1 bis 5, ferner aufweisend:
einen Retarder-Wärmeübertrager oder einen Kühlmittel-Retarder (44), der stromabwärts von einem der mehreren Ausgänge (40) des ersten Kühlmittelvolumenbereichs (K1) und stromaufwärts von einem Eingang (41) des zweiten Kühlmittelvolumenbereichs (K2) angeordnet ist; und
einen AGR-Wärmeübertrager (46), der stromabwärts von einem der mehreren Ausgänge (40) des ersten Kühlmittelvolumenbereichs (K1) und stromaufwärts von einem Eingang (41) des zweiten Kühlmittelvolumenbereichs (K2) angeordnet ist,
wobei:
der Wechseleinsatz (38) als ein, vorzugsweise starrer, Wandeinsatz oder Blendeneinsatz zum im Wesentlichen vollständigen Blockieren des Kühlmittelvolumenstroms durch die direkte Fluidverbindung ausgebildet ist.

8. Kühlsystem (10) nach einem der Ansprüche 1 bis 5, ferner aufweisend: Entweder einerseits einen Retarder-Wärmeübertrager oder einen Kühlmittel-Retarder (44), der stromabwärts von einem der mehreren Ausgänge (40) des ersten Kühlmittelvolumenbereichs (K1) und stromaufwärts von einem Eingang des zweiten Kühlmittelvolumenbereichs (K2) angeordnet ist, oder andererseits einen AGR-Wärmeübertrager (46), der stromabwärts von einem der mehreren Ausgänge (40) des ersten Kühlmittelvolumenbereichs (K1) und stromaufwärts von einem Eingang des zweiten Kühlmittelvolumenbereichs (K2) angeordnet ist,
wobei:
der Wechseleinsatz (38) als ein, vorzugsweise starrer, Blendeneinsatz zum Begrenzen des Kühlmittelvolumenstroms durch die direkte Fluidverbindung ausgebildet ist.

9. Kühlsystem (10) nach einem der Ansprüche 1 bis 5, wobei:
das Kühlsystem weder einen Retarder-Wärmeübertrager oder einen Kühlmittel-Retarder (44) noch einen AGR-Wärmeübertrager (46) aufweist; und
die Aufnahmeeinrichtung (36) frei von dem Wechseleinsatz (38) ist oder mit einem Wechseleinsatz (38) versehen ist, der eine Durchgangsöffnung aufweist, die den Kühlmittelvolumenstrom durch die direkte Fluidverbindung im Wesentlichen vollständig freigibt.

10. Kühlsystem (10) nach einem der Ansprüche 1 bis 5 oder 7 bis 9, ferner aufweisend:
einen dritten Kühlmittelvolumenbereich (K3), der stromaufwärts von mindestens einem Zylinderkopf (20) der Antriebsvorrichtung (12) angeordnet ist;
einen vierten Kühlmittelvolumenbereich (K4), der stromaufwärts von einem Motorblock (18) der Antriebsvorrichtung (12) angeordnet ist; und
ein Blendenelement (54), das in einer direkten Fluidverbindung zwischen dem dritten Kühlmittelvolumenbereich (K3) und dem vierten Kühlmittelvolumenbereich (K4) zum Vorgeben eines Kühlmittelvolumenstroms zwischen dem dritten Kühlmittelvolumenbereich (K3) und dem vierten Kühlmittelvolumenbereich (K4) angeordnet ist.

11. Kühlsystem (10) nach Anspruch 10, wobei:
der dritte Kühlmittelvolumenbereich (K3), der vierte Kühlmittelvolumenbereich (K4) und das Blendenelement (54) in einer gemeinsamen Kühlmittelverteilungsleitung (16) umfasst sind; und/oder
das Blendenelement (54) im Strömungsquerschnitt einstellbar oder starr ist; und/oder
das Blendenelement (54) wechselbar ausgeführt ist; und/oder
das Blendenelement (54) aus einer Gruppe von Blendenelementen ausgewählt ist, die sich untereinander in einem Strömungsquerschnitt durch das Blendenelement (54) unterscheiden.

12. Kühlsystem (10) nach einem der Ansprüche 1 bis 5 oder 7 bis 11, ferner aufweisend:
mehrere Wärmetauscher (44, 46, 48, 50, 52) und/oder zu temperierende Komponenten, die stromabwärts der mehreren Ausgänge (40) des ersten Kühlmittelvolumenbereichs (K1) angeordnet sind; und/oder
eine Kühlmittelpumpe (14), die stromaufwärts von der Antriebsvorrichtung (12) angeordnet ist; und/oder
ein Thermostat (24), das stromabwärts von dem zweiten Kühlmittelvolumenbereich (K2) angeordnet ist; und/oder
einen Kühlmittelkühler (26), der stromabwärts von dem zweiten Kühlmittelvolumenbereich (K2) angeordnet ist.

13. Kraftfahrzeug, vorzugsweise Nutzfahrzeug, mit einem Kühlsystem (10) nach einem der Ansprüche 1 bis 5 oder 7 bis 12.

14. Sammel- und Verteilungsleitung (22) für ein Kühlsystem (10) zum Kühlen einer Antriebsvorrichtung (12), aufweisend:
einen ersten Kühlmittelvolumenbereich (K1), der einen oder mehrere Eingänge (39) zum Sammeln von Kühlmittel und mehrere Ausgänge (40) zur Verteilung des Kühlmittels aufweist;
einen zweiten Kühlmittelvolumenbereich (K2), der stromabwärts von dem ersten Kühlmittelvolumenbereich (K1) angeordnet ist, einen oder mehrere Eingänge (41) zum Sammeln von Kühlmittel und einen Ausgang (42) zum Rezirkulieren des Kühlmittels aufweist; **dadurch gekennzeichnet, dass** die Sammel- und Verteilungsleitung
eine Aufnahmeeinrichtung (36) aufweist, die in einer direkten Fluidverbindung zwischen dem ersten Kühlmittelvolumenbereich (K1) und dem zweiten Kühlmittelvolumenbereich (K2) angeordnet und zum wahlweisen Aufnehmen oder Weglassen eines Wechseleinsatzes (38) zum Blockieren, Begrenzen und/oder Einstellen eines Kühlmittelvolumenstroms durch die direkte Fluidverbindung ausgebildet ist.

15. Verfahren zum Konfigurieren eines Kühlsystems (10), vorzugsweise für ein Kraftfahrzeug, aufweisend: Bereitstellen eines Kühlsystems (10) nach einem der Ansprüche 1 bis 5 oder 7 bis 12;
Anordnen mehrerer Wärmeübertrager (44, 46, 48, 50, 52) und/oder zu temperierender Komponenten, vorzugsweise aufweisend einen Retarder-Wärmeübertrager(44), einen Kühlmittel-Retarder und/oder einen AGR-Wärmeübertrager (46), stromabwärts von den mehreren Ausgängen (40) des ersten Kühlmittelvolumenbereichs (K1); **gekennzeichnet durch**
Wahlweises Anordnen oder Weglassen des Wechseleinsatzes (38) in der Aufnahmeeinrichtung (36) in Abhängigkeit von einer Anzahl, einer Art und/oder einem Kühlmittelbedarf der mehreren Wärmeübertrager (44, 46, 48, 50, 52) und/oder zu temperierenden Komponenten.

## Claims

1. A cooling system (10) for conducting a coolant for vehicles or stationary installations, comprising:
a drive device (12) having at least one cooling channel (28) through which the coolant can flow for cooling the drive device (12);
a first coolant volume region (K1) arranged downstream of the at least one cooling channel (28) for collecting the coolant from the at least one cooling channel (28) and comprising a plurality of outlets (40) for distributing the coolant;
a second coolant volume region (K2) arranged downstream of the first coolant volume region (K1), at least partially collecting the coolant distributed from the first coolant volume region (K1), and comprising an outlet (42) for recirculating the coolant; **characterised in that** the cooling system comprises a receiving device (36) arranged in direct fluid communication between the first coolant volume region (K1) and the second coolant volume region (K2) and configured to selectively receive or omit an exchange insert (38) for blocking, limiting and/or adjusting a volume flow of coolant through the direct fluid communication.

2. The cooling system (10) according to claim 1, wherein the drive device (12) comprises:
an internal combustion engine comprising one or more of the at least one cooling channel (28) for cooling the internal combustion engine; and/or
an electric drive comprising one or more of the at least one cooling channel (28) for cooling the electric drive; and/or
a fuel cell drive comprising one or more of the at least one cooling channel (28) for cooling the fuel cell drive.

3. The cooling system (10) according to claim 1 or claim 2, wherein the drive device (12) comprises:
an engine block (18) comprising one or more of the at least one cooling channel (28) for cooling the engine block (18); and
at least one cylinder head (20) comprising one or more of the at least one cooling channel (28) for cooling the at least one cylinder head (20).

4. The cooling system (10) according to any one of the preceding claims, wherein:
the first coolant volume region (K1), the second coolant volume region (K2) and the receiving device (36) are comprised in a common collection and distribution line (22); or
the first coolant volume region (K1) and the second coolant volume region (K2) are comprised in different components.

5. The cooling system (10) according to any one of the preceding claims, further comprising:
the exchange insert (38) arranged in the receiving device (36) and blocking, limiting and/or adjusting the direct fluid communication.

6. Use of a cooling system (10) according to claim 5, wherein:
the exchange insert (38) is selected from a group of exchange inserts which differ from each other in a flow cross-section of the exchange insert (38), wherein preferably:
the group of exchange inserts comprises passive or rigid exchange inserts; and/or
the group of exchange inserts comprises an orifice insert adjustable or controllable in flow cross-section; and/or
the group of exchange inserts comprises a wall insert or orifice insert for substantially completely blocking the flow of coolant through the direct fluid connection.

7. The cooling system (10) according to any one of claims 1 to 5, further comprising:
a retarder heat exchanger or a coolant retarder (44) arranged downstream of one of the plurality of outlets (40) of the first coolant volume region (K1) and upstream of an inlet (41) of the second coolant volume region (K2); and
an EGR heat exchanger (46) arranged downstream of one of the plurality of outlets (40) of the first coolant volume region (K1) and upstream of an inlet (41) of the second coolant volume region (K2),
wherein:
the exchange insert (38) is configured as a, preferably rigid, wall insert or orifice insert for substantially completely blocking the coolant volume flow through the direct fluid connection.

8. The cooling system (10) according to any one of claims 1 to 5, further comprising:
either, on the one hand, a retarder heat exchanger or a coolant retarder (44) arranged downstream of one of the plurality of outlets (40) of the first coolant volume region (K1) and upstream of an inlet of the second coolant volume region (K2), or, on the other hand, an EGR heat exchanger (46) arranged downstream of one of the plurality of outlets (40) of the first coolant volume region (K1) and upstream of an inlet of the second coolant volume region (K2),
wherein:
the exchange insert (38) is configured as an orifice insert, preferably rigid, for limiting the coolant volume flow through the direct fluid connection.

9. The cooling system (10) according to any one of claims 1 to 5, wherein:
the cooling system does not comprise a retarder heat exchanger or a coolant retarder (44) or an EGR heat exchanger (46); and
the receiving device (36) is free of the exchange insert (38) or is provided with an exchange insert (38) that comprises a through opening that substantially fully exposes the coolant volume flow through the direct fluid connection.

10. The cooling system (10) according to any one of claims 1 to 5 or 7 to 9, further comprising:
a third coolant volume region (K3) arranged upstream of at least one cylinder head (20) of the drive device (12);
a fourth coolant volume region (K4) arranged upstream of an engine block (18) of the drive device (12); and
an orifice member (54) arranged in direct fluid communication between the third coolant volume region (K3) and the fourth coolant volume region (K4) for presetting a coolant volume flow between the third coolant volume region (K3) and the fourth coolant volume region (K4).

11. The cooling system (10) according to claim 10, wherein:
the third coolant volume region (K3), the fourth coolant volume region (K4) and the orifice member (54) are comprised in a common coolant distribution line (16); and/or
the orifice element (54) is adjustable or rigid in flow cross-section; and/or
the orifice element (54) is configured to be exchangeable; and/or
the orifice element (54) is selected from a group of orifice elements which differ from one another in a flow cross-section through the orifice element (54).

12. The cooling system (10) according to any one of claims 1 to 5 or 7 to 11, further comprising:
a plurality of heat exchangers (44, 46, 48, 50, 52) and/or components to be tempered arranged downstream of the plurality of outlets (40) of the first coolant volume region (K1); and/or
a coolant pump (14) arranged upstream of the drive device (12); and/or
a thermostat (24) arranged downstream of the second coolant volume region (K2); and/or
a coolant radiator (26) arranged downstream of the second coolant volume region (K2).

13. A motor vehicle, preferably utility vehicle, comprising a cooling system (10) according to any one of claims 1 to 5 or 7 to 12.

14. A collection and distribution line (22) for a cooling system (10) for cooling a drive device (12), comprising:
a first coolant volume region (K1) comprising one or more inlets (39) for collecting coolant and a plurality of outlets (40) for distributing the coolant;
a second coolant volume region (K2), arranged downstream of the first coolant volume region (K1), comprising one or more inlets (41) for collecting coolant and an outlet (42) for recirculating the coolant;
**characterised in that** the collection and distribution conduit (22) comprises a receiving device (36) arranged in direct fluid communication between the first coolant volume region (K1) and the second coolant volume region (K2) and configured to selectively receive or omit an exchange insert (38) for blocking, limiting and/or adjusting a coolant volume flow through the direct fluid communication.

15. A method for configuring a cooling system (10), preferably for a motor vehicle, comprising:
providing a cooling system (10) according to any one of claims 1 to 5 or 7 to12;
arranging a plurality of heat exchangers (44, 46, 48, 50, 52) and/or components to be tempered, preferably comprising a retarder heat exchanger (44), a coolant retarder and/or an EGR heat exchanger (46), downstream of the plurality of outlets (40) of the first coolant volume region (K1);
**characterised by**
selectively arranging or omitting the exchange insert (38) in the receiving device (36) depending on a number, a type and/or a coolant requirement of the plurality of heat exchangers (44, 46, 48, 50, 52) and/or components to be tempered.

## Revendications

1. Système de refroidissement (10) pour l'acheminement d'un fluide de refroidissement pour des véhicules ou des installations stationnaires, présentant :
un dispositif d'entraînement (12) avec au moins un canal de refroidissement (28), qui peut être traversé par le fluide de refroidissement pour le refroidissement du dispositif d'entraînement (12) ;
une première zone volumique de fluide de refroidissement (K1), qui est agencée en aval de l'au moins un canal de refroidissement (28) pour la collecte du fluide de refroidissement provenant de l'au moins un canal de refroidissement (28) et présentant plusieurs sorties (40) pour la distribution du fluide de refroidissement ;
une deuxième zone volumique de fluide de refroidissement (K2), qui est agencée en aval de la première zone volumique de fluide de refroidissement (K1), collecte au moins partiellement le fluide de refroidissement distribué par la première zone volumique de fluide de refroidissement (K1), et présente une sortie (42) pour la recirculation du fluide de refroidissement ; **caractérisé en ce que** le système de refroidissement présente un appareil de réception (36), qui est agencé dans une liaison fluidique directe entre la première zone volumique de fluide de refroidissement (K1) et la deuxième zone volumique de fluide de refroidissement (K2) et qui est configuré pour la réception ou l'omission sélective d'un insert interchangeable (38) pour bloquer, limiter et/ou ajuster un débit volumique de fluide de refroidissement à travers la liaison fluidique directe.

2. Système de refroidissement (10) selon la revendication 1, dans lequel le dispositif d'entraînement (12) présente :
un moteur à combustion interne, qui présente un ou plusieurs de l'au moins un canal de refroidissement (28) pour refroidir le moteur à combustion interne ; et/ou
un entraînement électrique, qui présente un ou plusieurs de l'au moins un canal de refroidissement (28) pour refroidir l'entraînement électrique ; et/ou
un entraînement de pile à combustible, qui présente un ou plusieurs de l'au moins un canal de refroidissement (28) pour refroidir l'entraînement de pile à combustible.

3. Système de refroidissement (10) selon la revendication 1 ou la revendication 2, dans lequel le dispositif d'entraînement (12) présente :
un bloc moteur (18), qui présente un ou plusieurs de l'au moins un canal de refroidissement (28) pour refroidir le bloc moteur (18) ; et
au moins une culasse (20), qui présente un ou plusieurs de l'au moins un canal de refroidissement (28) pour refroidir l'au moins une culasse (20).

4. Système de refroidissement (10) selon l'une quelconque des revendications précédentes, dans lequel :
la première zone volumique de fluide de refroidissement (K1), la deuxième zone volumique de fluide de refroidissement (K2) et l'appareil de réception (36) sont compris dans une conduite de collecte et de distribution commune (22) ; ou
la première zone volumique de fluide de refroidissement (K1) et la deuxième zone volumique de fluide de refroidissement (K2) sont comprises dans des composants différents.

5. Système de refroidissement (10) selon l'une quelconque des revendications précédentes, présentant en outre :
l'insert interchangeable (38), qui est agencé dans l'appareil de réception (36) et qui bloque, limite et/ou ajuste la liaison fluidique directe.

6. Utilisation d'un système de refroidissement (10) selon la revendication 5, dans laquelle :
l'insert interchangeable (38) est choisi parmi un groupe d'inserts interchangeables qui diffèrent entre eux par une section transversale d'écoulement de l'insert interchangeable (38),
dans laquelle de préférence :
le groupe d'inserts interchangeables comprend des inserts interchangeables passifs ou rigides ; et/ou
le groupe d'inserts interchangeables comprend un insert de diaphragme à section transversale d'écoulement réglable ou contrôlable ; et/ou
le groupe d'inserts interchangeables comprend un insert de paroi ou un insert de diaphragme pour bloquer essentiellement complètement le débit volumique de fluide de refroidissement à travers la liaison fluidique directe.

7. Système de refroidissement (10) selon l'une quelconque des revendications 1 à 5, présentant en outre :
un échangeur de chaleur à ralentisseur ou un ralentisseur de fluide de refroidissement (44), qui est agencé en aval de l'une des plusieurs sorties (40) de la première zone volumique de fluide de refroidissement (K1) et en amont d'une entrée (41) de la deuxième zone volumique de fluide de refroidissement (K2) ; et
un échangeur de chaleur EGR (46), qui est agencé en aval de l'une des plusieurs sorties (40) de la première zone volumique de fluide de refroidissement (K1) et en amont d'une entrée (41) de la deuxième zone volumique de fluide de refroidissement (K2),
dans lequel :
l'insert interchangeable (38) est configuré sous la forme d'un insert de paroi ou d'un insert de diaphragme, de préférence rigide, pour bloquer essentiellement complètement le débit volumique de fluide de refroidissement à travers la liaison fluidique directe.

8. Système de refroidissement (10) selon l'une quelconque des revendications 1 à 5, présentant en outre :
soit d'une part un échangeur de chaleur à ralentisseur ou un ralentisseur de fluide de refroidissement (44), qui est agencé en aval de l'une des plusieurs sorties (40) de la première zone volumique de fluide de refroidissement (K1) et en amont d'une entrée de la deuxième zone volumique de fluide de refroidissement (K2), soit d'autre part, un échangeur de chaleur EGR (46), qui est agencé en aval de l'une des plusieurs sorties (40) de la première zone volumique de fluide de refroidissement (K1) et en amont d'une entrée de la deuxième zone volumique de fluide de refroidissement (K2),
dans lequel :
l'insert interchangeable (38) est configuré sous la forme d'un insert de diaphragme, de préférence rigide, pour limiter le débit volumique de fluide de refroidissement à travers la liaison fluidique directe.

9. Système de refroidissement (10) selon l'une quelconque des revendications 1 à 5 , dans lequel :
le système de refroidissement ne présente ni un échangeur de chaleur à ralentisseur ou un ralentisseur de fluide de refroidissement (44), ni un échangeur de chaleur EGR (46) ; et
l'appareil de réception (36) est dépourvu de l'insert interchangeable (38) ou est pourvu d'un insert interchangeable (38) qui présente une ouverture de passage qui libère essentiellement complètement le débit volumique de fluide de refroidissement à travers la liaison fluidique directe.

10. Système de refroidissement (10) selon l'une quelconque des revendications 1 à 5 ou 7 à 9, présentant en outre :
une troisième zone volumique de fluide de refroidissement (K3), qui est agencée en amont d'au moins une culasse (20) du dispositif d'entraînement (12) ;
une quatrième zone volumique de fluide de refroidissement (K4), qui est agencée en amont d'un bloc moteur (18) du dispositif d'entraînement (12) ; et
un élément de diaphragme (54), qui est agencé dans une liaison fluidique directe entre la troisième zone volumique de fluide de refroidissement (K3) et la quatrième zone volumique de fluide de refroidissement (K4) pour prédéfinir un débit volumique de fluide de refroidissement entre la troisième zone volumique de fluide de refroidissement (K3) et la quatrième zone volumique de fluide de refroidissement (K4).

11. Système de refroidissement (10) selon la revendication 10, dans lequel :
la troisième zone volumique de fluide de refroidissement (K3), la quatrième zone volumique de fluide de refroidissement (K4) et l'élément de diaphragme (54) sont compris dans une conduite de distribution de fluide de refroidissement commune (16) ; et/ou
l'élément de diaphragme (54) est réglable ou rigide dans la section transversale d'écoulement ; et/ou
l'élément de diaphragme (54) est réalisé sous forme interchangeable ; et/ou
l'élément de diaphragme (54) est choisi parmi un groupe d'éléments de diaphragme qui diffèrent les uns des autres par une section transversale d'écoulement à travers l'élément de diaphragme (54).

12. Système de refroidissement (10) selon l'une quelconque des revendications 1 à 5 ou 7 à 11, présentant en outre :
plusieurs échangeurs de chaleur (44, 46, 48, 50, 52) et/ou composants à réguler en température, qui sont agencés en aval des plusieurs sorties (40) de la première zone volumique de fluide de refroidissement (K1) ; et/ou
une pompe à fluide de refroidissement (14), qui est agencée en amont du dispositif d'entraînement (12) ; et/ou
un thermostat (24), qui est agencé en aval de la deuxième zone volumique de fluide de refroidissement (K2) ; et/ou
un refroidisseur de fluide de refroidissement (26), qui est agencé en aval de la deuxième zone volumique de fluide de refroidissement (K2).

13. Véhicule automobile, de préférence véhicule utilitaire, avec un système de refroidissement (10) selon l'une quelconque des revendications 1 à 5 ou 7 à 12.

14. Conduite de collecte et de distribution (22) pour un système de refroidissement (10) pour le refroidissement d'un dispositif d'entraînement (12), présentant :
une première zone volumique de fluide de refroidissement (K1), qui présente une ou plusieurs entrées (39) pour la collecte de fluide de refroidissement et plusieurs sorties (40) pour la distribution du fluide de refroidissement ;
une deuxième zone volumique de fluide de refroidissement (K2), qui est agencée en aval de la première zone volumique de fluide de refroidissement (K1), présente une ou plusieurs entrées (41) pour la collecte de fluide de refroidissement et une sortie (42) pour la recirculation du fluide de refroidissement ; **caractérisée en ce que** la conduite de collecte et de distribution présente un appareil de réception (36), qui est agencé dans une liaison fluidique directe entre la première zone volumique de fluide de refroidissement (K1) et la deuxième zone volumique de fluide de refroidissement (K2) et qui est configuré pour la réception ou l'omission sélective d'un insert interchangeable (38) pour bloquer, limiter et/ou ajuster un débit de fluide de refroidissement à travers la liaison fluidique directe.

15. Procédé de configuration d'un système de refroidissement (10), de préférence pour un véhicule automobile, présentant :
la fourniture d'un système de refroidissement (10) selon l'une quelconque des revendications 1 à 5 ou 7 à 12 ;
l'agencement de plusieurs échangeurs de chaleur (44, 46, 48, 50, 52) et/ou composants à réguler en température, présentant de préférence un échangeur de chaleur à ralentisseur (44), un ralentisseur de fluide de refroidissement et/ou un échangeur de chaleur EGR (46), en aval des plusieurs sorties (40) de la première zone volumique de fluide de refroidissement (K1) ; **caractérisé par**
l'agencement ou l'omission sélectif de l'insert interchangeable (38) dans l'appareil de réception (36) en fonction d'un nombre, d'un type et/ou d'une demande de fluide de refroidissement des plusieurs échangeurs de chaleur (44, 46, 48, 50, 52) et/ou composants à réguler en température.
